# EUROPEAN PATENT APPLICATION

(11) **EP 1 152 418 A1**
(43) Date of publication of application: **07.11.2001**
(21) Application number: 00974867.4
(22) Date of filing: 09.11.2000
(51) Int. Cl.: G11B 23/03

(54) **DISK CARTRIDGE DEVICE AND DISK CARTRIDGE**

(30) Priority: 12.11.1999 JP 32322999; 30.05.2000 JP 2000160764
(71) Applicant: Sony Corporation, Tokyo 141-0001 (JP)
(72) Inventor: SANADA, Yotaro, c/o Sony Corporation, Tokyo 141-0001 (JP); KUSUI, Yoshio, c/o Sony Corporation, Tokyo 141-0001 (JP); NETSU, Naohiro, c/o Sony Corporation, Tokyo 141-0001 (JP)
(74) Representative: Thévenet, Jean-Bruno
(86) International application number: JP0007889
(87) International publication number: WO0137281

(57) **Abstract**

Disk cartridge 1, (21) in which disks having different disk diameters are stored in the respective cartridge housings that are different in size and thickness and the cartridge housing includes a shutter 7, (27) that can open and close are provided together with a shutter opening and closing member 9 which makes the shutter open by a shutter opening protrusion 9a when the disk cartridge is inserted into a drive device and makes the shutter close by a shutter closing protrusion 9b when said disk cartridge is removed from said drive device. Thus, shutter opening positions are made identical with shutter closing positions for both of the disk cartridge having a larger disk diameter and the disk cartridge having a smaller disk diameter. Moreover, each inserting end of said disk cartridges 1, (21) is formed as an arc-like surface shape 1a so that an inserting. direction into the drive device can easily be recognized.

## Description

### TECHNICAL FIELD

The present invention relates to a disk cartridge apparatus and a disk cartridge in which, for example, an information signal is recorded on a signal recording layer or an information signal recorded on the signal recording layer is reproduced by applying optical beams to the signal recording layer of an optical disk. Particularly, the present invention relates to a so-called compatible type disk cartridge apparatus in which different kinds of disk cartridges storing disks of different disk diameters in the respective cartridge housings that are different in size and thickness are selectively loaded onto a drive device and in which a shutter opening and closing member can be simplified by making shutter opening positions identical to shutter closing positions of the different kinds of disk cartridges. Moreover, the present invention relates to a disk cartridge in which an inserting side of the disk cartridge can be recognized from a shape of the cartridge housing by forming the inserting side of the disk cartridge into a cutout surface shape so as to avoid mis-insertion into a drive device, and also can be inserted into the drive device in a normal posture by the cutout surface shape serving as a guide.

### BACKGROUND ART

As a medium for recording a variety of information such as audio information or video information has hitherto been proposed an optical disk in which information recorded on this recording medium is reproduced or information is recorded on the recording medium using an optical beam. This kind of optical disk is widespread as a so-called disk cartridge having the disk stored within a cartridge housing.

On the other hand, a demand for smaller drive device to which a disk cartridge is applied is increasing in view of an installing space when it is incorporated into information processors such as computers.

In order to miniaturize the drive device, disk cartridges also need to be miniaturized. In addition, there is also a demand for a higher storage capacity of a disk cartridge. To this end, the applicant of the present application has previously proposed disk cartridges of different kinds in which disks of different disk diameters are stored within the respective cartridge.housings that are different in size and thickness in Japanese patent application No. 11-176029 entitled a disk cartridge. Further, the applicant of the present application has previously proposed a so-called compatible type disk cartridge apparatus in which disk cartridges of different kinds storing disks of different disk diameters within the respective cartridge housings that are different in size and thickness are selectively loaded onto a single drive device in Japanese patent application No. 11-323227 and so on.

However, in the compatible system in which the above disk cartridges of different kinds having different sizes are selectively loaded onto a single drive device, if the drive device is such one as drives to rotate disks of the disk cartridges of different sizes by a single spindle motor, the disk cartridge must be inserted into the drive device until the rotation center of the disk coincides with the spindle motor and be properly positioned.

Therefore, in the disk cartridges which are different in size, if opening positions at which shutters are opened differ from closing positions at which shutters are closed by a shutter opening and closing member, the drive device must be provided with a shutter opening and closing member adapted for disk cartridges that are different in size. For example, in the disk cartridge such as a floppy disk, an MD (mini disc), an MO (magneto-optical disk), etc. there is no idea of to assuming that in which shutters of disk cartridges of different sizes can be opened and closed using a common shutter opening and closing member in a single drive device.

Furthermore, the above disk cartridge has substantially a square-shaped outward form and has an arrow mark indication on the cartridge housing for discriminating the direction of inserting the disk cartridge into the drive device. However, the arrow mark is so small that it is hard for users to recognize it. Moreover, because the housing of the disk cartridge has also a square shape, it is very difficult to discriminate an insertion direction from the shape of the disk cartridge.

The present invention has been made in order to solve the above problem and aims to provide a disk cartridge apparatus in which shutters of disk cartridges of different sizes can be opened and closed by a single shutter opening and closing member, and also to obtain a disk cartridge in which users can easily confirm at first sight the inserting direction of the disk cartridge and which can be guided to be inserted into a drive device in a normal posture.

### DISCLOSURE OF THE INVENTION

In order to attain the above object, a disk cartridge apparatus according to the present invention comprises different kinds of disk cartridges storing disks of different disk diameters in cartridge housings that are different in size and including shutters for opening and closing window portions as well as a shutter opening and closing member for opening and closing the shutters of the disk cartridges provided in the drive device, so that shutter opening positions may be made identical to shutter closing positions for both of the disk cartridge of a larger disk diameter and the disk cartridge of a smaller disk diameter.

According to the above disk cartridge apparatus, because the shutter opening positions and the shutter closing positions of the disk cartridges that are different in size are made identical to each other, the shutters can be opened and closed by a common shutter opening and closing member, so that rotation centers of disks of the disk cartridges that are different in size can be positioned properly for a spindle motor of the drive device.

Moreover, the shutter opening and closing member includes a shutter opening protrusions for releasing a lock of a shutter-lock member and pushing back the shutter open when the disk cartridge is inserted into the drive device and a shutter closing protrusion for being engaged with a window aperture provided in the shutter and closing the shutter when the disk cartridge is removed from the drive device.

The disk cartridge according to the present invention comprises different kinds of disk cartridges which hold disks of different disk diameters in the respective cartridge housings that are different in size and thickness, and have shutters that can open and close window portions, wherein a comparatively large cutout surface is formed in the inserting end of the disk cartridge.

According to the above-described disk cartridge, because the cutout surface is formed in the inserting end of the disk cartridge, it will be possible to recognize easily at first sight the direction of inserting it into the drive device, thus allowing mis-insertion to be prevented from happening. Moreover, when the disk cartridge is inserted slantwise into an insertion slot of the drive device, the cutout surface serves as a guide to the insertion slot, thereby enabling the disk cartridge to be pulled into a normal posture and inserted correctly.

As concerns the cutout surface, both corners of the inserting end are made into round surfaces and a convex arcuate surface shape is formed continuously with the round surface as the cutout surface.

In addition, the cutout surfaces are made to have the same shapes or similar shapes in different types of disk cartridges.

### BRIEF DESCRIPTION OF DRAWINGS

FIG. 1 is aperspective view showing a first disk cartridge according to the present invention seen from the upper half side.

FIG. 2 is a plan view showing the same first disk cartridge seen from the upper half side.

FIG. 3 is a bottom view showing the same first disk cartridge seen from the lower half side.

FIG. 4 is a perspective view showing a second disk cartridge according to the present invention seen from the upper half side.

FIG. 5 is a plan view showing the same second disk cartridge seen from the upper half side.

FIG. 6 is a bottom view showing the same second disk cartridge seen from the lower half side.

FIG. 7 is a plan view showing the state appearing immediately before a shutter is opened when the same first disk cartridge is inserted into a drive device.

FIG. 8 is a plan view showing the same first disk cartridge with its shutter being opened.

FIG. 9 is a plan view showing the state appearing immediately before the shutter is opened when the same second disk cartridge is inserted into the drive device.

FIG. 10 is a plan view showing the same second disk cartridge with its shutter being opened.

FIG. 11 is a perspective view of a cartridge holder.

FIG. 12 is a enlarged side view showing the first disk cartridge in the same operational position as in FIG. 7.

FIG. 13 is an enlarged side view showing the state in which the same first disk cartridge is loaded.

FIG. 14 is an enlarged side view showing the second disk cartridge in the same operational position as in FIG. 10.

FIG. 15 is an enlarged side view showing the state in which the same second disk cartridge is being loaded.

FIG. 16 is a plan view showing a first disk cartridge according to another embodiment with its shutter opened.

FIG. 17 is an enlarged side view showing the same first disk cartridge appearing immediately before its shutter is opened.

FIG. 18 is an enlarged side view showing the state in which the same first disk cartridge is loaded.

FIG. 19 is an enlarged side view showing a second disk cartridge according to another embodiment appearing immediately before its shutter is opened.

FIG. 20 is an enlarged side view showing the state in which the same second disk cartridge is loaded.

FIG. 21 is an enlarged side view showing a first disk cartridge according to a still another embodiment obtained immediately before its shutter is opened.

FIG. 22 is an enlarged side view showing the state in which the same first disk cartridge is loaded.

FIG. 23 is a perspective view of the first disk cartridge having a different shape of the inserting front end.

FIG. 24 is also a perspective view of the second disk cartridge having a different shape of the inserting front end.

### BEST MODE FOR CARRYING OUT THE INVENTION

A disk cartridge apparatus and a disk cartridge according to embodiments of the present invention will be described below with reference to the drawings, in which case the present invention is applied to two kinds of small and large disk cartridges having different disk diameters by way of example.

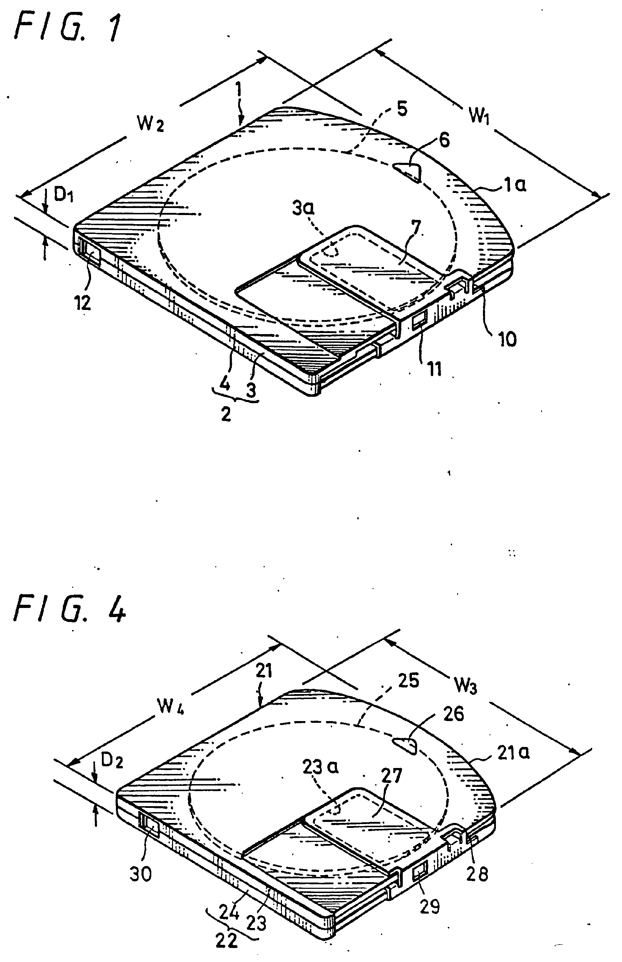

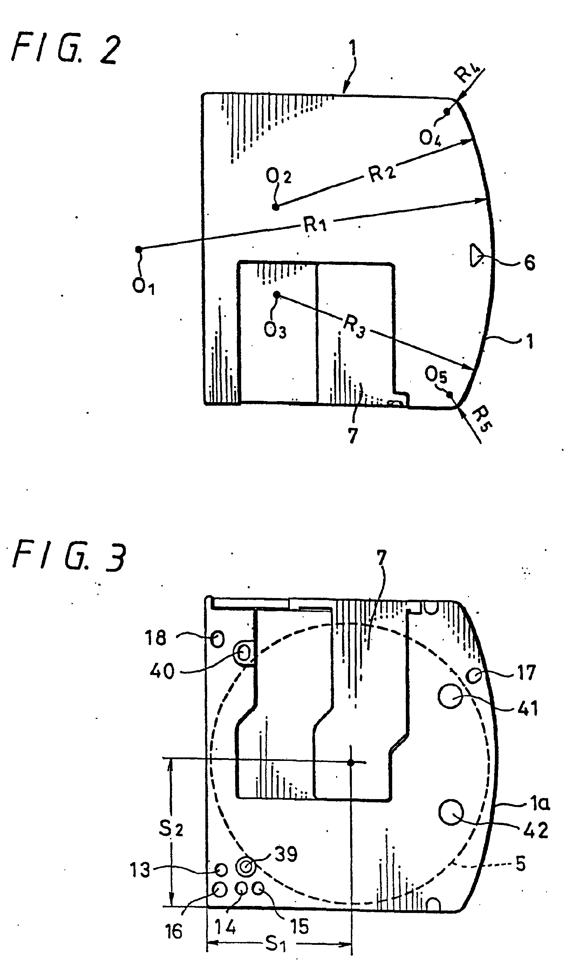

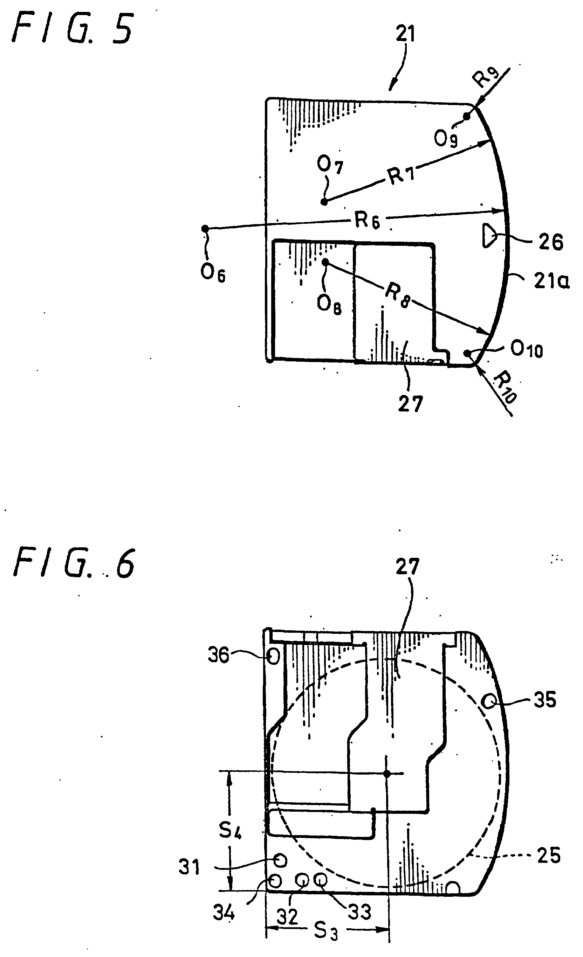

FIG. 1 is a perspective view from the upper half side showing a disk cartridge with a large disk diameter (hereinafter referred to as a "first disk cartridge") whose shutter is closed, FIG. 2 is a plan view showing it from the upper half side, FIG. 3 is a bottom view showing it from the lower half side, FIG. 4 is a perspective view from the upper half side showing a disk cartridge with a small disk diameter (hereinafter referred to as a "second disk cartridge") whose shutter is closed, FIG. 5 is a plan view showing it from the upper half side, and FIG. 6 is a bottom view showing it from the lower half side.

A reference numeral 1 denotes the whole of the first disk cartridge, and a cartridge housing 2 is comprised of an upper half 3 and a lower half 4 which are unified together at their joint surfaces on an outer periphery by ultrasonic welding. A disk 5 stored within the first disk cartridge 1 is , for example, an optical disk and its outward diameter is φ64.8 mm. The inserting direction of the first disk cartridge 1 is indicated by an arrow mark 6. The insertion side of the first disk cartridge 1 is formed as a convex arc-like surface 1a. This arc-like surface 1a is recognized as the insertion side of the first disk cartridge 1. Specifically, the arc-like surface shape 1a has a composite arcuate shape which is composed of an arc of a radius R₁ (83 mm) around its center O₁ and arc of radiuses R₂, R₃ (each 49.4 mm) around their centers O₂, O₃. Both of the corners are formed as rounds of radiuses R₄, R₅ (each 3 mm) around their centers O₄, O₅. The disk housing 2 is standardized in such a manner that a width W₁ of one side perpendicular to the inserting direction is 72 mm, a depth W₂ of the other side perpendicular to the above side being 68 mm and a thickness D₁ being 4.7 mm. The disk 5 is disposed relative to the cartridge housing 2 in such a manner that a distance S₁ from the rear end of the cartridge housing 2 to the center of the disk is 34 mm, and a distance S₂ from the side end opposite to a shutter plate, described below, of the cartridge housing 2 to the center of the disk is 33.7 mm.

The above first disk cartridge 1 includes a shutter plate 7 molded into a U-like shape which can slide so as to open and close both of upper and lower surfaces of the cartridge housing 2. While the shutter plate 7 is opened, a part of the upper surface (surface of the side to which bias is applied) of the disk 5 along the radial direction is exposed in an opening window 3a on the upper half 3 on the upper surface side of the disk cartridge 1 whereas on the lower surface side of the first disk cartridge 1, a part of the lower surface (surface which information can be read from and written into) of the disk 5 along the radial direction is exposed in an opening window (not shown) on the lower half 3.

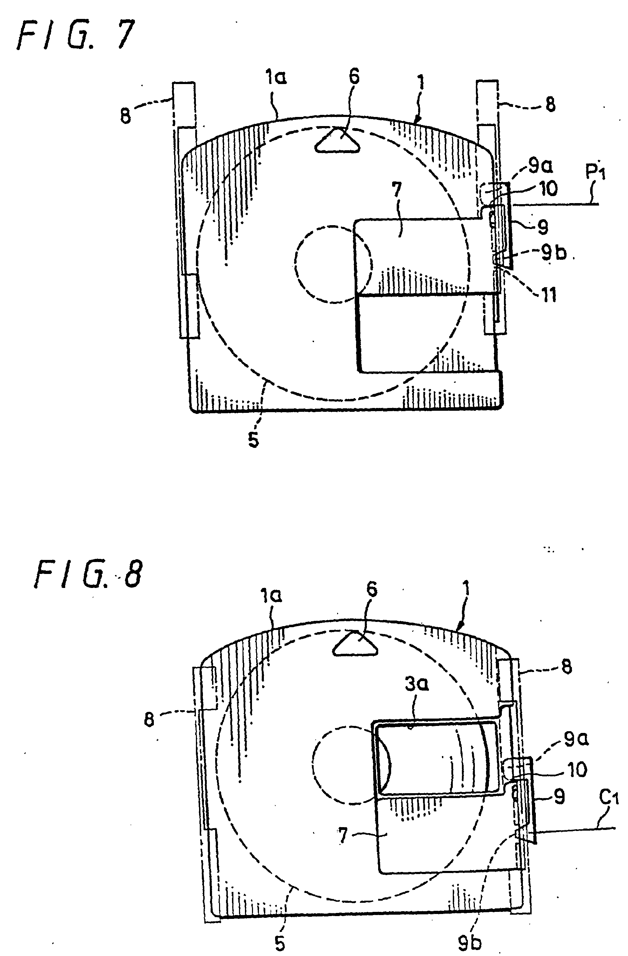

This shutter plate 7 is usually closed and locked at the closing position by a lock member not shown. The opening and closing operation of the shutter plate 7 will be described below in detail. As shown in FIG. 7, when the first disk cartridge 1 is inserted into a cartridge holder 8 of a drive device that is a recording and playback apparatus, the lock member is released by a shutter opening protrusion 9a of a shutter opening and closing member 9 provided on the cartridge holder 8 side. Immediately thereafter, the shutter opening protrusion 9a is brought in contact with a shutter front end face 10 of the shutter plate 7, and at the same time, the shutter closing protrusion 9b is engaged with a window aperture 11 opened on the side surface of the shutter plate. As a consequence, as the first disk cartridge 1 is moved in the inserting direction, the shutter plate 7 is pushed back so that the shutter plate 7 is opened as shown in FIG. 8. When the first disk cartridge 1 is removed from the drive device, the shutter plate 7 is pulled back and closed by the shutter closing protrusion 9b.

As shown in FIG. 1, the first disk cartridge 1 includes at its rear a mis-erase preventing plug 12 provided in order to prevent recorded information written on the disk 5 from being erased by mistake. In the lower half 4 is formed a mis-erase preventing detection hole 13 which opens and closes linking with a slide operation of this mis-erase preventing plug 12. In FIG. 3, reference numerals 14 and 15 denote identification holes for discriminating specifications of the first disk cartridge 1.

Furthermore, in the lower half 4 of the first disk cartridge 1 are formed a circular positioning hole 16 adjacent to the mis-erase preventing detection hole 13, an oblong positioning hole 17 which is located diagonally opposite to the positioning hole 16 and is elongated aslant with respect to the inserting front end of the cartridge, and an oblong positioning hole 18 which is located at the rear end of the cartridge and is elongated in parallel with the positioning hole 16. In other words, the positioning hole 16 and the positioning hole 18 constitute the first reference position determining holes and the positioning hole 16 and the positioning hole 17 constitute the second reference position determining holes.

On the other hand, a reference numeral 21 denotes the whole of a second disk cartridge. A cartridge housing 22 is comprised of an upper half 23 and a lower half 24 which are unified together at their joint surfaces by ultrasonic welding. A disk 25 stored within the second disk cartridge 21 is, for example, an optical disk and its outward diameter being φ50 mm, and the inserting direction of the second disk cartridge 21 being indicated by an arrow mark 26.

The insertion side of the second disk cartridge 21 is formed as a convex arc-like surface 21a. This arc-like surface 21a is recognized as the insertion side of the second disk cartridge 21. Specifically, the arc-like surface shape 21a has a composite arcuate shape which is composed of an arc of a radius R₆ (67.4 mm) around its center O₆ and arcs of radiuses R₇, R₈ (each 39.9 mm) around their centers O₇, O₈. Both of the corners are formed as rounds of radiuses R₉, R₁₀ (each 2.5 mm) around their centers O₉, O₁₀. The disk housing 22 is standardized in such a manner that a width W₃ of one side perpendicular to the inserting direction is 58 mm, a depth W₄ of the other side perpendicular to the above side being 53 mm and a thickness D₂ being 4 mm. The disk 25 is disposed relative to the cartridge housing 22 in such a manner that a distance S₃ from the rear end of the cartridge housing 2 to the center of the disk is 26.9 mm, and a distance S₄ from the side end opposite to a shutter plate 27, described below, of the cartridge housing 2 to the center of the disk is 26.4 mm.

The above second disk cartridge 21 includes a shutter plate 27 molded into a U-like shape which can slide so as to open and close both of upper and lower surfaces of the cartridge housing 22. While the shutter plate 27 is opened, a part of the upper surface (surface of the side to which bias is applied) of the disk 25 along the radial direction appears in an opening window 23a defined on the upper half 23 on the upper surface side of the second disk cartridge 21 whereas on the lower surface side of the second disk cartridge 21, a part of the lower surface (surface which information can be read from and written into) of the disk 25 along the radial direction appears in an opening window (not shown) defined on the lower half 24.

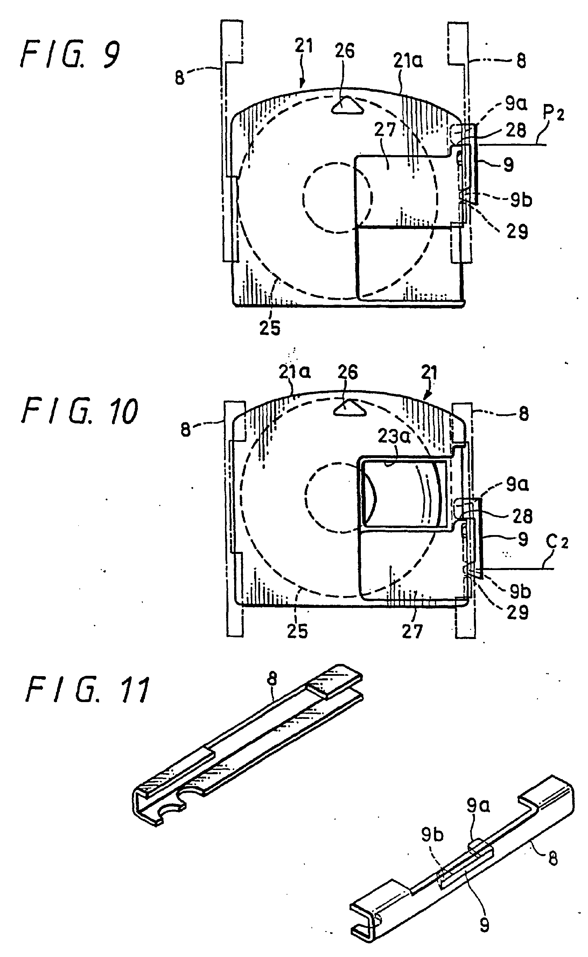

This shutter plate 27 is usually closed and locked at the closing position by a lock member not shown. The opening and closing operation of the shutter plate 27 will be described below in detail. As shown in FIG. 9, when the second disk cartridge 21 is inserted into the cartridge holder 8 of the drive device, the lock member is released by the shutter opening protrusion 9a of the shutter opening and closing member 9 provided on the cartridge holder 8 side. Immediately thereafter, the shutter opening protrusion 9a is brought in contact with a shutter front end face 28 of the shutter plate 27, and at the same time the shutter closing protrusion 9b is engaged with a window aperture 29 opened on the side surface of the shutter plate. As a consequence, as the second disk cartridge 21 is moved in the inserting direction, the shutter plate 27 is pushed back so that the shutter plate 27 is opened as shown in FIG. 10. When the second disk cartridge 21 is removed from the drive device, the shutter plate 27 is pulled back and closed by the shutter closing protrusion 9b.

The second disk cartridge 21 includes at its rear a mis-erase preventing plug 30 provided in order to prevent recorded information written into the disk 25 from being erased by mistake. On the lower half 24 is formed a mis-erase preventing detection hole 31 which opens and closes linking with a slide operation of this mis-erase preventing plug 30. In FIG. 6; reference numerals 32 and 33 denote identification holes for discriminating specifications of the second disk cartridge 21.

Furthermore, in the lower half 24 of the second disk cartridge 21 are formed a circular positioning hole 34 adjacent to the mis-erase preventing detection hole 31, an cblong positioning hole 35 which is located diagonally opposite to the positioning hole 34 and is elongated aslant with respect to the inserting front end of the cartridge, and an oblong positioning hole 36 which is located at the rear end of the cartridge and is elongated in parallel with the positioning hole 34. In other words, the positioning hole 34 and the positioning hole 36 constitute the first reference position determining holes, and the positioning hole 34 and the positioning hole 35 constitute the second reference position determining holes.

The first and second disk cartridges 1, 21 having the above structure are held by the above common cartridge holder 8 of the drive device and can be placed in the loading positions.

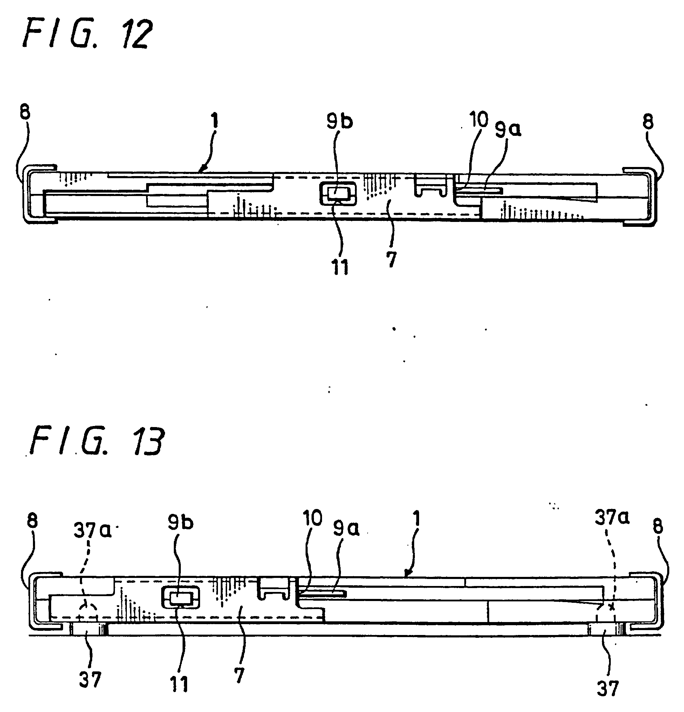

FIG. 11 is a perspective view of the cartridge holder 8. The cartridge holder 8 is comprised of a pair of left and right members which have U-like shape cross-sections and are opposite to each other. The above shutter opening and closing member 9 is attached to one of the cartridge holder members 8. Specifically, the cartridge holder members 8 are linked by a link mechanism, not shown, in such a manner that they can be moved so that a space between the holder members may be made corresponding to the widths of the respective large and small disk cartridges 1, 21. Accordingly, the shutter plates 7, 27 of the first disk cartridge 1 and the second disk cartridge 21 can be opened and closed by a single common shutter opening and closing member 9.

FIG. 8 shows the loading state in which the first disk cartridge 1 properly positioned on the cartridge holder 8 and the rotation center of the disk 5 coincides with a spindle motor not shown. FIG. 10 shows the loading state in which the second disk cartridge 21 is properly positioned on the cartridge holder 8 and the rotation center of the disk 25 coincides with a spindle motor not shown.

When the disk cartridge is inserted into the drive device, if a shutter opening position P₁ where the shutter plate 7 of the first disk cartridge 1 is opened by the shutter opening protrusion 9a of the shutter opening and closing member 9 is made identical to a shutter opening position P₂ where the shutter plate 27 of the second disk cartridge 21 is opened by the shutter opening protrusion 9a of the shutter opening and closing member 9, then the loading positions of the first and second disk cartridges 1, 21 can accurately be determined by the common shutter opening and closing member 9.

When the disk cartridge is removed from the drive device, if a shutter closing position C₁ where the shutter plate 7 of the first disk cartridge 1 is closed by the shutter closing protrusion 9b of the shutter opening and closing member 9 is made identical to a shutter closing position C₂ where the shutter plate 27 of the second disk cartridge 21 is opened by the shutter closing protrusion 9b, then removal timings of the first and second disk cartridges 1 and 21 can accurately be determined by the common shutter opening and closing member 9.

FIG. 12 is a side view showing a positional relationship among the first disk cartridge 1, the shutter opening protrusion 9a and the shutter closing protrusion 9b obtained immediately before the shutter plate 7 is opened by the shutter opening and closing member 9 after the first disk cartridge 1 has been inserted into the cartridge holder 8. FIG. 13 is a side view showing a positional relationship among the shutter opening protrusion 9a and the shutter closing protrusion 9b in the loading position where the shutter plate 7 is opened, the positioning holes 16, 18 for the first disk cartridge 1 are properly positioned on the positioning pins 37a, 37a, and are properly positioned on height-determining pedestals 37, 37. Although the inserting direction of the first disk cartridge 1 is the left and right direction on the sheet of drawing, there is illustrated as if the left and right end portions of the first disk cartridge 1 are held by the cartridge holder 8 for convenience sake of explanation.

In these figures, the first disk cartridge 1 has only a space of approximately 0.2 mm against the cartridge holder 8. in the vertical direction. As shown in FIG. 13, a vertical dimension of the window aperture 11 is determined so that the shutter closing protrusion 9b can fall within the window aperture 11 bored in the shutter plate 7 even under the condition in which a height of the first disk cartridge 1 is determined in the loading position and is upwardly urged relative to the cartridge holder 8.

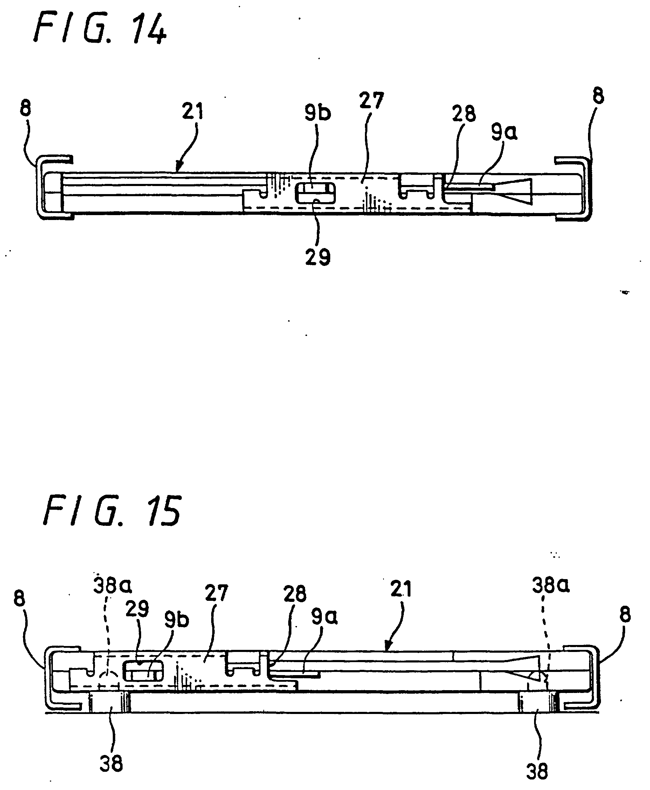

FIG. 14 is a side view showing a positional relationship among the second disk cartridge 21, the shutter opening protrusion 9a and the shutter closing protrusion 9b obtained immediately before the shutter plate 27 is opened by the shutter opening and closing member 9 after the second disk cartridge 21 has been inserted into the cartridge holder 8. FIG. 15 is a side view showing a positional relationship among the shutter opening protrusion 9a and the shutter closing protrusion 9b in the loading position when the shutter plate 27 is opened, the positioning holes 34, 36 for the second disk cartridge 21 are properly positioned on the positioning pins 38a, 38a; and are properly positioned on height-determining pedestals 38, 38. Although the inserting direction of the second disk cartridge 21 is the left and right direction on the sheet of drawing similarly to the above, there is illustrated as the left and right end portions of the second disk cartridge 21 are held by the cartridge holder 8 for convenience' sake of explanation.

In these figures, the second disk cartridge 21 has a space of approximately 0.9 mm against the cartridge holder 8 in the vertical direction. The dimensions of the window aperture 29 is determined so that the shutter closing protrusion 9b can engage with the window aperture 29 of the shutter plate 27 even under the condition in which a height of the second disk cartridge 21 is determined in the loading position and is upwardly urged relative to the cartridge holder 8, as shown in FIG. 15.

Moreover, in order that the positioning pins 38a, 38a and the pedestals 38, 38 of the second disk cartridge 21 may not interfere when the first disk cartridge 1 is loaded, relief holes 39, 40 for escaping from these positioning pins 38a and pedestals 38 are provided. Additionally, reference numerals 41 and 42 denote relief holes for escaping from pedestals, not shown, which determine the height of the disk cartridge 21.

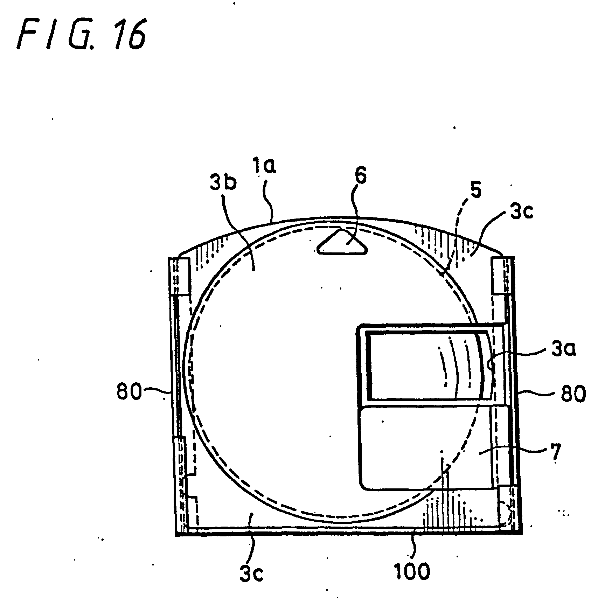

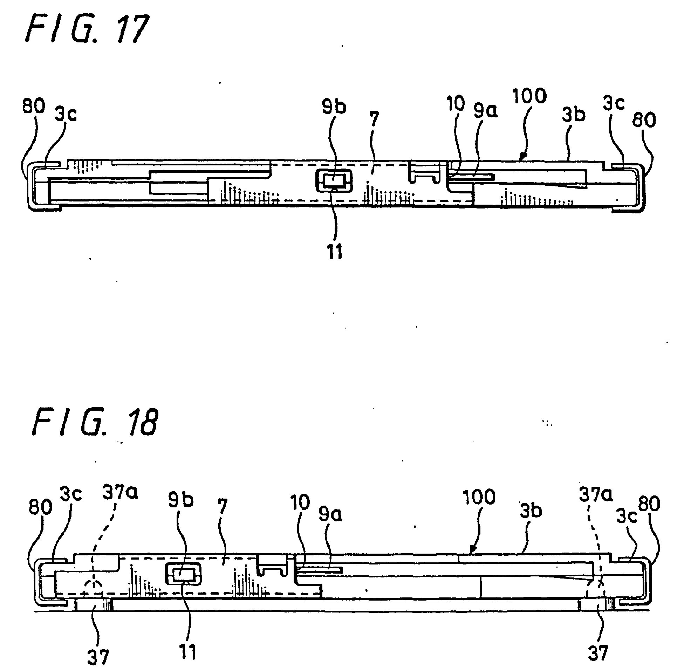

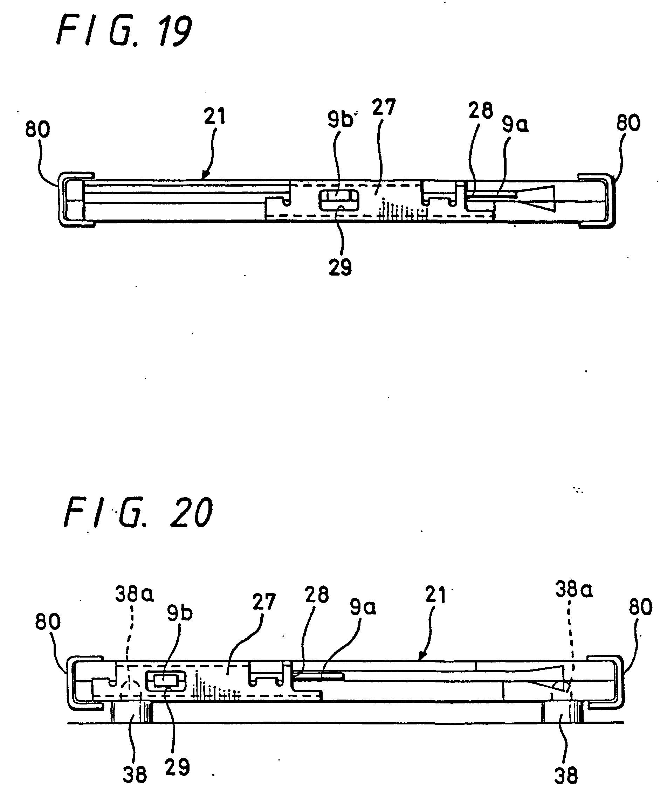

FIG. 16 is a plan view showing a modified example of the first disk cartridge 1 and the state in which a first disk cartridge 100 is inserted into a cartridge holder 80. FIG. 17 is a side view showing a positional relationship among the first disk cartridge 100, the shutter opening protrusion 9a and the shutter closing protrusion 9b appearing immediately before the shutter plate 7 of the first disk cartridge 100 is opened by the shutter opening and closing member 9. FIG. 18 is a side view showing a positional relationship between the shutter opening protrusion 9a and the shutter closing protrusion 9b in the loading position in which the shutter plate 7 is opened and the first disk cartridge 100 is properly positioned on the height-determining pedestals 37, 37 having the positioning pins 37a, 37a. FIG. 19 is a side view showing a positional relationship among the second disk cartridge 21, the shutter opening protrusion 9a and the shutter closing protrusion 9b appearing immediately before the shutter plate 27 of the second disk cartridge 21 is opened by the shutter opening and closing member 9. FIG. 20 is a side view showing a positional relationship between the shutter opening protrusion 9a and the shutter closing protrusion 9b at the loading position in which the shutter plate 27 is opened and the second disk cartridge 21 is properly positioned on the height-determining pedestals 38, 38 having the positioning pins 38a, 38a.

As shown in these figures, the upper half 3 of the first disk cartridge 100 is comprised of a half portion covering a portion in which the disk 5 is stored and a half portion 3c which surrounds the portion 3b and is lowered stepwise in height. In the first disk cartridge 100, a whole thickness from the bottom surface of the lower half 4 to the top surface of the half portion 3b is 4.7 mm, and a thickness from the bottom surface of the lower half 4 to the half portion 3c is 4 mm which is the same thickness as that of the second disk cartridge 13.

Since the first disk cartridge 100 has the above structure, the thicknesses of the first disk cartridge 100 and the second disk cartridge 21 at their portions held by the cartridge holder 80 can be made equal. Thus, spaces of the first disk cartridge 100 and the second disk cartridge 21 against the cartridge holder in the vertical direction can be made to fall within a range of approximately 0.2 mm, thereby enabling the first disk cartridge and the second disk cartridge to be held stably on the cartridge holder. Therefore, the vertical movement produced when a height of the first and second disk cartridges 100, 21 are determined in the loading position can be minimized and the shutter closing protrusion 9b can be prevented from being disengaged from the window apertures 11, 29 of the shutter plates 7, 27.

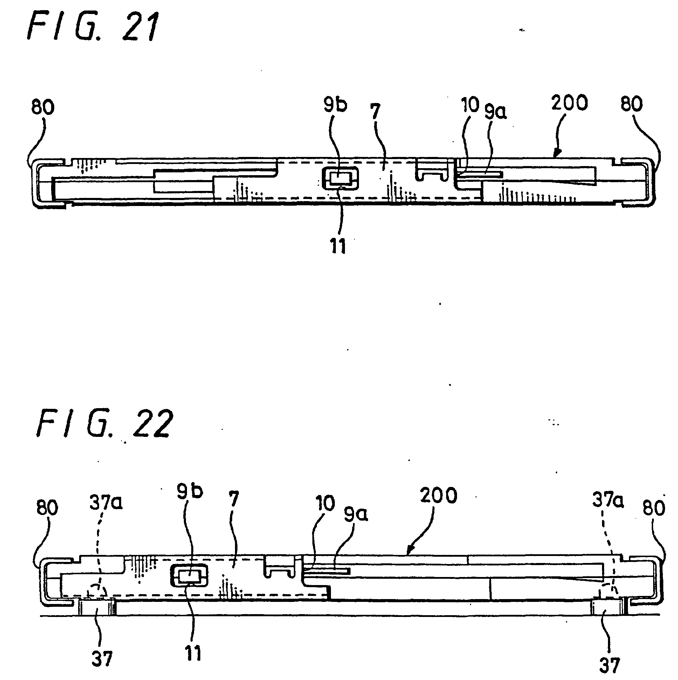

FIG. 21 is a side view showing a first disk cartridge 200 which is a modified example of the first disk cartridge 100 shown in FIG. 16 and shows a positional relationship among the first disk cartridge 200, the shutter opening protrusion 9a and the shutter closing protrusion 9b obtained immediately before the shutter plate 7 is opened by the shutter opening and closing member 9. FIG. 22 is a side view showing a positional relationship between the shutter opening protrusion 9a and the shutter closing protrusion 9b at the loading position in which the shutter plate 7 is opened and the first disk cartridge 200 is properly positioned on the height-determining pedestals 37, 37 having the positioning pins 37a, 37a.

As shown in these figures, the first disk cartridge 200 includes portions in both the upper half 3 side and the lower half 4 side, which are lowered stepwise in height and surrounds the portions storing the disk 5. In this case, a whole thickness of the first disk cartridge 200 is 4.7 mm, a height of a step on the upper half 3 side being 0.6 mm, and a height of a step on the lower half 4 side being 0.1 mm.

Since the first disk cartridge 200 is constructed as described above, if the pedestal 37 for determining a height of the first disk cartridge 200 in the loading position and the pedestal 38 for determining a height of the second disk cartridge 21 shown in FIG. 20 are on a level with each other, then a distance between an optical head and a disk of the first disk cartridge 200 and a distance between the optical head and a disk of the second disk cartridge 21 can be made equal, so that a mechanism portion can be simplified, though not described in the present invention.

Moreover, the first disk cartridge 1 and the second disk cartridge 21 have similar convex arc-like surface shapes 1a and 21a on the inserting side into the drive device, respectively. Therefore, it will be possible to easily recognize at first sight from the entire shape that the arc-like surface shapes 1a and 21a indicate the inserting sides of the disk cartridges, thereby allowing mis-insertion into the drive device in a wrong direction to be prevented from happening.

Furthermore, because the first disk cartridge 1 and the second disk cartridge 21 have convex arc-like shapes 1a and 21a on the inserting sides respectively, even if the first disk cartridge 1 or the second disk cartridge 21 is inserted slantwise relative to the insertion slot of the drive device, the arc-like surface shape serves as a guide to the insertion slot, so that the disk cartridge can be pulled into a normal posture.

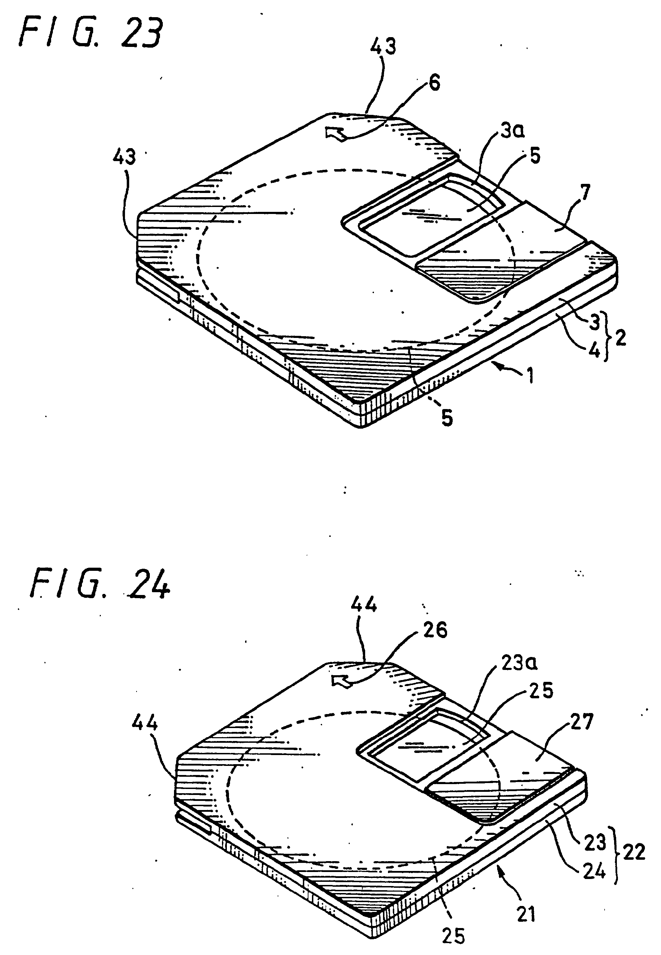

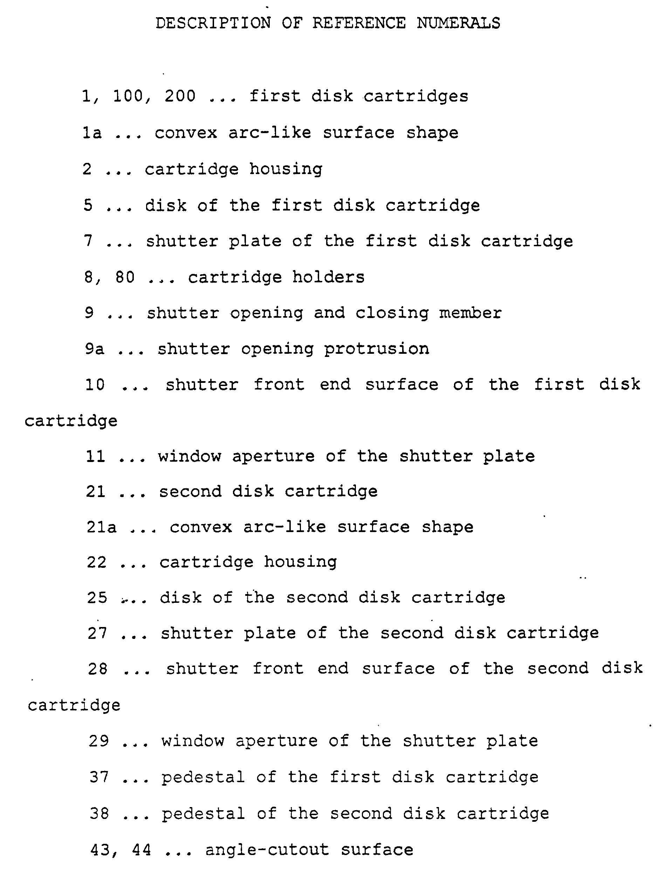

In the above embodiment, the case where the shape of the inserting end of the disk cartridge is formed into the arc-like surface shape has been described. However, the present invention is not limited thereto and can otherwise have comparatively large flat angle-cutout surfaces 43,43 at both corners of the inserting end of the first disk cartridge 1 as shown in FIG. 23. Also, the present invention can have comparatively large flat angle-cutout surfaces 44, 44 at both corners of the inserting end of the second cartridge 21 as shown in FIG. 24. In this case also, it is possible to easily recognize at first sight that the angle-cutout surfaces 43, 44 indicate the inserting side of the disk cartridge. In addition, even if it is inserted in a slant posture, the angle-cutout surfaces 43, 44 form a guide, so that the disk cartridge can be pulled into a normal posture.

As described above, because the disk cartridge apparatus according to the present invention includes the drive device having the single common shutter opening and closing member 9, the shutter opening positions and the shutter closing positions when the first disk cartridge with a large disk diameter and the second disk cartridge with a small disk diameter are inserted into the single drive device can be made identical to each other. As a result, when disk cartridges with different disk diameters are used in a compatible-system drive device, a complex mechanism is advantageously not required, but can be simplified.

Moreover, because the disk cartridge according to the present invention has a large arc-like surface shape 1a on the inserting end into the drive device for the first disk cartridge having a larger disk diameter, or has a flat angle-cutout surface 43, 44 on the inserting end into the drive device for the second disk cartridge having a smaller disk diameter, it is possible to easily recognize at first sight the inserting side of the disk cartridge, thereby enabling mis-insertion into the drive device to be prevented from happening. Furthermore, even if the disk cartridge is inserted into the drive device in a slant posture, the arc-like surface shape or the angle-cutout surface serves as a guide into the insertion slot, so that the disk cartridge can advantageously be pulled into a normal posture.

Although two kinds of disk cartridges, large and small, having different disk diameters have been described as an embodiment according to the present invention, it will also be possible to make shutter opening positions identical to shutter closing positions in two or more kinds of different-sized disk cartridges using a single common shutter opening and closing member.

In addition, the present invention is widely applicable to a disk cartridge in which a disk other than an optical disk, e.g., a magneto-optical disk, a mini disk (MD), a hard disk, a floppy disk and the like is stored in the cartridge housing.

As described above, because the disk cartridge apparatus according to the present invention comprises a single common shutter opening and closing member provided in the drive device, the shutter opening positions and the shutter closing positions obtained when the first disk cartridge with a large disk diameter and the second disk cartridge with a small disk diameter are inserted into the single drive device can be made identical to each other. When disk cartridges of different disk diameters are used in the compatible-system drive device, a complex mechanism is advantageously not required, but can be simplified.

According to the disk cartridge of the present invention, because the disk cartridge has comparatively large cutout surfaces on its inserting end, the inserting side of the disk cartridge can easily be recognized at first sight, so that mis-insertion into the drive device can be avoided. Moreover, even if the disk cartridge is inserted into the drive device in a slant posture, the arc-like surface shape forms a guide into the insertion slot and so the disk cartridge can advantageously be pulled into a normal posture.

### INDUSTRIAL APPLICABILIY

The disk cartridge apparatus and the disk cartridge according to the present invention are applicable to so-called compatible type disk cartridge apparatus and disk cartridge in which different kinds of disk cartridges having disks of different disk diameters stored in the respective cartridge housings different in size and thickness are selectively loaded onto the drive device.

## Claims

1. A disk cartridge apparatus **characterized by** comprising:
different types of disk cartridges in which disks having different disk diameters, readable and/or writable by the same method are stored in the respective cartridge housings that are different in size and thickness and said cartridge housing includes a shutter that can open and close a window portion through which said disks are made accessible from the outside and that is locked by a shutter-lock member when said window portion is closed; and
a shutter opening and closing member which is provided in a drive device of said disk cartridges, makes said shutter open when said disk cartridge is inserted into the drive device, and makes said shutter close when said disk cartridge is removed from said drive device;
in order that a shutter opening position may be made identical to a shutter closing position for both of the disk cartridge having a larger disk diameter and the disk cartridge having a smaller disk diameter.

2. A disk cartridge apparatus according to claim 1, **characterized in that**
said shutter opening and closing member includes a shutter opening protrusion for releasing the shutter-lock member from locking so that the shutter may be pushed back and made open when the disk cartridge is inserted into the drive device and a shutter closing protrusion which is engaged with a window aperture bored in the shutter so that the shutter may be closed when the disk cartridge is removed from the drive device.

3. A disk cartridge comprising different kinds of disk cartridges in which disks having different disk diameters, readable and/or writable by the same method are stored in the respective cartridge housings that are different in size and thickness and said cartridge housing includes a shutter that can open and close a window portion through which said disks are made accessible from the outside and that is locked by a shutter-lock member when said window portion is closed, the disk cartridge being **characterized in that**
a comparatively large cutout surface is formed at an inserting. end of each of said disk cartridges.

4. A disk cartridge according to claim 3, **characterized in that**
said cutout surface is constructed in such a manner that both corners of the inserting end are made as rounds and a convex arc-like surface shape is formed continuously with the rounds.

5. A disk cartridge according to claim 3 or 4, **characterized in that**
each of said cutout surfaces has an identical shape or a similar shape in different types of disk cartridges.
